# EUROPEAN PATENT APPLICATION

(11) **EP 2 503 764 A1**
(43) Date of publication of application: **26.09.2012**
(21) Application number: 12157482.6
(22) Date of filing: 29.02.2012
(51) Int. Cl.: H04M 1/2745, H04M 1/725

(54) **Contact prioritizer**

(30) Priority: 21.03.2011 US 201161454645 P; 28.02.2012 US 201213406583
(71) Applicant: Sony Mobile Communications AB, 221 88 Lund (SE)
(72) Inventor: Nilsson, Per Johan, 256 61 Helsingborg (SE)
(74) Representative: Aurell, Henrik

(57) **Abstract**

A method including determining a location of a user device and a user; identifying a user context of the user based on the location; generating a communication history based on communications received and sent by the user device within a time window; storing contact entries; generating a ranking for at least some of the contact entries based on the identified user context, the communication history, and the contact entries, wherein the ranking is an inferred user priority of contact entries; and displaying the ranked contact entries on a home screen or a desktop of the user device.

## Description

### CROSS-REFERENCE TO RELATED APPLICATION

This application claims priority under 35. U.S.C. § 119, based on U.S. Provisional Patent Application No. 61/454,645 filed March 21, 2011, the disclosure of which is hereby incorporated by reference herein.

### BACKGROUND

In today's social era, users have to manage a large number of contacts. For example, various communicative applications (e.g., e-mail, short messaging service (SMS), multimedia messaging service (MMS), telephone, etc.) include various contacts and social networking applications can lead to users having numerous contacts (e.g., Facebook® friends, Twitter@ contacts, Google® contacts, etc.). These contacts may range from very close contacts (e.g., friends, family, etc.) to contacts the users may not have ever met or even will meet.

### SUMMARY

According to one aspect, a method may include determining a location of a user device and a user; identifying a user context of the user based on the location; generating a communication history based on communications received and sent by the user device within a time window; storing contact entries; generating a ranking for at least some of the contact entries based on the identified user context, the communication history, and the contact entries, wherein the ranking is inferred user priorities associated with contact entries; and displaying the ranked contact entries on a home screen or a desktop of the user device.

Additionally, the user context may include a work context and a home context, and the communication history may include at least one of e-mail messages, telephone calls, short messaging service messages, multimedia messaging service messages, or instant messaging messages.

Additionally, the method may include receiving a user tag designated for one of the contact entries; and assigning a priority weighting value in correspondence to the user tag to the one of the contact entries.

Additionally, the method may include identifying whether there is a time restriction pertaining to the location; and identifying the user context based on the location and the time restriction when the time restriction exists pertaining to the location.

Additionally, the method may include identifying a second user context when the user moves to another location that correlates to the second user context; generating a second ranking for at least some of the contact entries based on the second user context, a communication history, and the contact entries, wherein the second ranking is inferred user priorities associated with contact entries; and displaying the second ranked contact entries.

Additionally, the method may include using calendar information for identifying the user context.

Additionally, the method may include generating the communication history based on the user context pertaining to the communications received and sent by the user device within the time window.

Additionally, the method may include receiving a user selection as to a type of ranking algorithm to use to generate the ranking.

Additionally, the method may include assigning one or more weights in relationship to one or more parameters included in the identified user context, the communication history, and the contact entries; calculating the inferred user priorities for the at least some of the contact entries; and selecting contact entries having higher inferred user priorities relative to other contact entries as the ranked contact entries.

Additionally, the method may include receiving a user selection for specifying the time window.

According to another aspect, a user device may comprise a location component configured to identify a location of the user device; a memory that stores instructions; and a processor that executes the instructions and configures the processor to identify a user context of a user based on a location identified by the location component; generate a communication history based on communications received and sent by the user device within a time window; store contact entries; generate a ranking for at least some of the contact entries based on the identified user context, the communication history, and the contact entries, wherein the ranking is inferred user priorities associated with contact entries; and display the ranked contact entries.

Additionally, the user device may be configured to receive a user tag designated for one of the contact entries; and assign a priority weighting value in correspondence to the user tag to the one of the contact entries.

Additionally, the user device may be configured to identify a second user context when the user moves to another location that correlates to the second user context; generate a second ranking for at least some of the contact entries based on the second user context, a communication history, and the contact entries, wherein the second ranking is inferred user priorities associated with contact entries; and display the second ranked contact entries.

Additionally, the user device may be configured to assign one or more weights in relationship to one or more parameters included in the identified user context, the communication history, and the contact entries; calculate the inferred user priorities for the at least some of the contact entries; and select contact entries having higher inferred user priorities relative to other contact entries as the ranked contact entries.

Additionally, the user device may be configured to receive a user selection as to a type of ranking algorithm to use to generate the ranking.

Additionally, the user context may include a work context and a home context, and the communication history may include at least one of e-mail messages, telephone calls, short messaging service messages, multimedia messaging service messages, or instant messaging messages.

Additionally, the user device may be a mobile communication device.

According to yet another aspect, a tangible computer-readable medium may comprise instructions for determining a location of a user device and a user; identifying a user context of the user based on the location; generating a communication history based on communications received and sent by the user device within a time window; storing contact entries; generating a ranking for at least some of the contact entries based on the identified user context, the communication history, and the contact entries, wherein the ranking is inferred user priorities associated with contact entries; and displaying the ranked contact entries on a home screen or a desktop of the user device.

Additionally, the tangible computer-readable medium may comprise instructions for assigning one or more weights in relationship to one or more parameters included in the identified user context, the communication history, and the contact entries; calculating the inferred user priorities for the at least some of the contact entries; and selecting contact entries having higher inferred user priorities relative to other contact entries as the ranked contact entries.

Additionally, the tangible computer-readable medium may comprise instructions for receiving a user selection for specifying the time window.

### BRIEF DESCRIPTION OF THE DRAWINGS

The accompanying drawings, which are incorporated in and constitute a part of this specification, illustrate exemplary embodiments described herein and, together with the description, explain these exemplary embodiments. In the drawings:

Fig. 1 is a diagram illustrating an exemplary environment in which an exemplary embodiment of a contact prioritizer may be implemented;

Fig. 2 is a diagram illustrating an exemplary user device in which an exemplary embodiment of the contact prioritizer may be implemented; and

Fig. 3 is a diagram illustrating exemplary components of the user device;

Fig. 4 is a flowchart illustrating an exemplary process for generating a ranked contact list by the contact prioritizer; and

Figs. 5A - 5C are diagrams illustrating an exemplary scenario pertaining to a use-case of the contact prioritizer.

### DETAILED DESCRIPTION

The following detailed description refers to the accompanying drawings. The same reference numbers in different drawings may identify the same or similar elements. Also, the detailed description does not limit the invention. Rather the scope of the invention is defined by the appended claims.

According to exemplary embodiments, a user device includes a contact prioritizer application that ranks contacts based on user context and communication history. Depending on the number of contacts a user has, the contact prioritizer application may rank a subset of the contacts according to a user-configurable number. For example, if the user has twenty-five contacts, the user may configure the contact prioritizer to rank five of the contacts. According to an exemplary embodiment, the contact prioritizer application may display each ranked contact on a desktop, a home page, or a home screen of the user device to allow the user quick and easy access to the ranked contacts.

According to an exemplary embodiment, the user device includes a location aware component to provide location information to the contact prioritizer application. A variety of technologies or techniques (e.g., Global Positioning System (GPS), cellular positioning methods (e.g., triangulation, etc.), local positioning methods (e.g., Bluetooth, IEEE 802.11, Ultra Wide Band, etc.)) exist to identify a geographic position associated with a person or a device. However, these technologies may provide the person's geographic position or a geographic position of the device with different degrees of precision or accuracy. While, a GPS is a popular technology that enables the person or the device to obtain geographic positional information, the GPS typically does not work well inside buildings or underground due to the absence of line of sight to satellites and attenuation and scattering of signals caused by roofs, walls, and other objects. In this regard, other technologies, such as, for example, an indoor positioning system (IPS) may be utilized.

Based on the location information, the contact prioritizer application can determine the context of a communication. For example, if the user receives or places a telephone call while at home, the contact prioritizer application may attribute the telephone call to a "home" context based on the location information. The contact prioritizer application may include default contexts (e.g., home, work, elsewhere). Additionally, or alternatively, the contact prioritizer application may permit the user to configure context location(s) of his or her liking. Still further, the contact prioritizer application may permit the user to configure a context location to change over time. By way of example, the user may work from home during the week. The contact prioritizer application may permit the user to configure the same location (e.g., the user's home) to correspond to a work context given a particular time period (e.g., 9 a.m. - 5 p.m., Monday - Friday), and a home context given another time period (e.g., 5:01 p.m. - 8:59 p.m., Monday - Sunday). Additionally, or alternatively, the contact prioritizer application may use calendar information to manage context. For example, the user may be taking a day off from work on Friday and notes this in his/her calendar (e.g., "day-off," "vacation day," etc.). The contact prioritizer application may automatically modify the context for Friday from work to home. The contact prioritizer application may recognize trigger words or the semantic meaning of user entries used in the user's calendar to manage context. This may be particularly useful for users whose work location and/or time period for work does not follow a regular schedule.

According to an exemplary embodiment, the contact prioritizer application allows the user to modify a ranking of contacts. For example, the contact prioritizer application may allow the user to tag particular contacts. The contact prioritizer application will interpret the tag associated with a contact as a contact that has a certain degree of priority. Thus, under some circumstances, a contact that otherwise may not be included in a particular ranking, may be included in the ranking of contacts based on the tag.

According to an exemplary embodiment, the contact prioritizer application may use the user's communication history to generate a ranking of contacts to be presented to the user. The communication history may include the location of the user, the type of communication (e.g., e-mail, SMS message, MMS message, Instant Messaging (IM) message, telephone call, etc.), the name(s) of the other parties involved in the communication, the duration of the communication, and time information (e.g., date, day, time).

According to an exemplary embodiment, the contact prioritizer application will be notified when the user device receives or sends a communication. For example, the contact prioritizer application may be made aware of communications by the operating system of the user device. The contact prioritizer application may monitor or obtain information pertaining to communication events (e.g., type of communication, duration of communication, party involved, context, etc.). The contact prioritizer application may generate a ranking of contacts (e.g., a subset of contacts) based on this information, as well as other information described herein, and present (e.g., display) the ranked contacts to the user.

According to an exemplary embodiment, the contact prioritizer application may permit the user to make other user configurations that impact the rankings of contacts. For example, the user may configure the contact prioritizer application to automatically display a contact entry (e.g., on the home page, the desktop, the main screen, etc.) when the user receives or sends a communication to that contact, regardless of whether the contact is included in a ranked contact list. This feature may be useful when, for example, the user will communicate with a particular contact intermittently throughout the day, and the contact is not someone that has a relatively high priority (e.g., the contact is not in the ranked contact list). According to other embodiments, the contact prioritizer application may not automatically display the contact entry when the contact communicates with the user (i.e., not giving priority to a contact when the user receives or sends a communication to that contact).

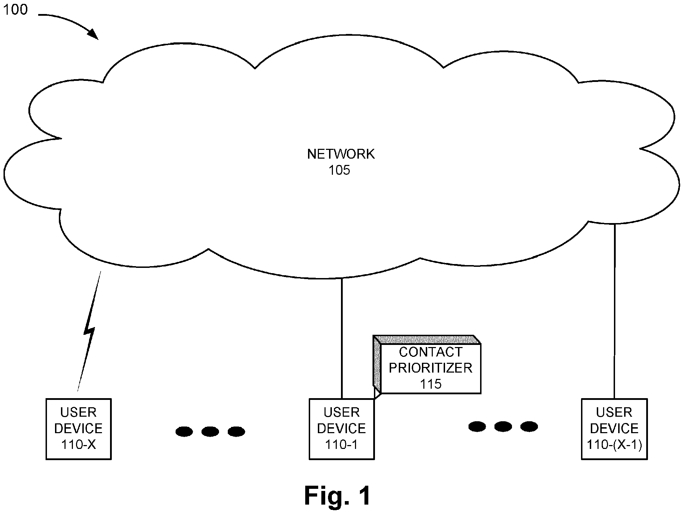

Fig. 1 is a diagram illustrating an exemplary environment in which an exemplary embodiment of the contact prioritizer may be implemented. As illustrated, environment 100 includes a network 105, user devices 110-1 through 110-X (referred to individually as user device 110 and collectively user devices 110), and a contact prioritizer 115. Environment 100 may include wired and/or wireless connections between user devices 110.

The number of devices and configuration in environment 100 is exemplary and provided for simplicity. In practice, environment 100 may include additional devices, fewer devices, different devices, and/or differently arranged devices than those illustrated in Fig. 1A.

Network 105 may include one or multiple networks of one or multiple types. For example, network 105 may include the Internet, a wide area network, a private network, a public network, an intranet, a local area network, an Internet Protocol (IP) network, a wired network, a wireless network (e.g., a mobile network, a cellular network, a non-cellular network, etc.), etc. According to an exemplary embodiment, network 105 may include a network that distributes or makes available services, such as, for example, television service and Internet service. Although not illustrated, network 105 may include various network devices, such as, for example, web servers, SMS servers, MMS servers, e-mail servers, routers, telephone switches, security devices, application servers, gateways, etc.

User device 110 may correspond to various types of user devices, such as, a portable device, a mobile device, a handheld device, a tablet device, a palmtop device, or a stationary device that has communicative capabilities. By way of further example, user device 110 may take the form of a telephone (e.g., a wireless phone (e.g., a radio phone, a smartphone, etc.), or a wired phone (e.g., an IP phone, etc.)), a data organizer, a computer (e.g., a palmtop computer, a laptop computer, a netbook, a desktop computer, etc.), a personal communication system (PCS) terminal, an iPad™ device, an iPhone™ device, an Xperia™ device, or a Web-access device.

As further illustrated in Fig. 1, user device 110-1 includes contact prioritizer 115. According to an exemplary implementation, contact prioritizer 115 may take the form of software (e.g., a contact prioritizer application, a widget, etc.). According to such an implementation, contact prioritizer 115 may provide various graphical user interfaces to permit the user to configure user settings, select contacts, etc.

As previously described, contact prioritizer 115 can manage contacts originating from various sources, such as, a centralized contact application (e.g., a phonebook application, an address book application etc.), which is typically resident on various types of user devices. The centralized contact application can include social networking contacts (e.g.,Facebook™ contacts,Twitter™ contacts, etc.), e-mail contacts, SMS contacts, telephone contacts, etc. According to such an implementation, contact prioritizer 115 can access contacts stored by the centralized contact application via an application programming interface (API).

Contact prioritizer 115 may generate a ranked contact list based on context, communication history, and user preferences described herein. According to an exemplary embodiment, the ranked list of contacts may include a subset of the total contacts (e.g., 2 -5 contacts). However, the number of contacts included in the ranked list may be a user-configurable value. The ranked contacts can be displayed to the user (e.g., on a home page, a desktop, a main screen, etc.). For example, each ranked contact may be displayed as an icon or some other type of graphical user interface. As will be described further below, depending on the ranked contact, the user may simply select the icon to initiate a communication (e.g., in which the form of communication is already determined) or the user may need to make further selections (e.g., select the form of communication (e.g., telephone, e-mail, etc.)) before the communication is initiated.

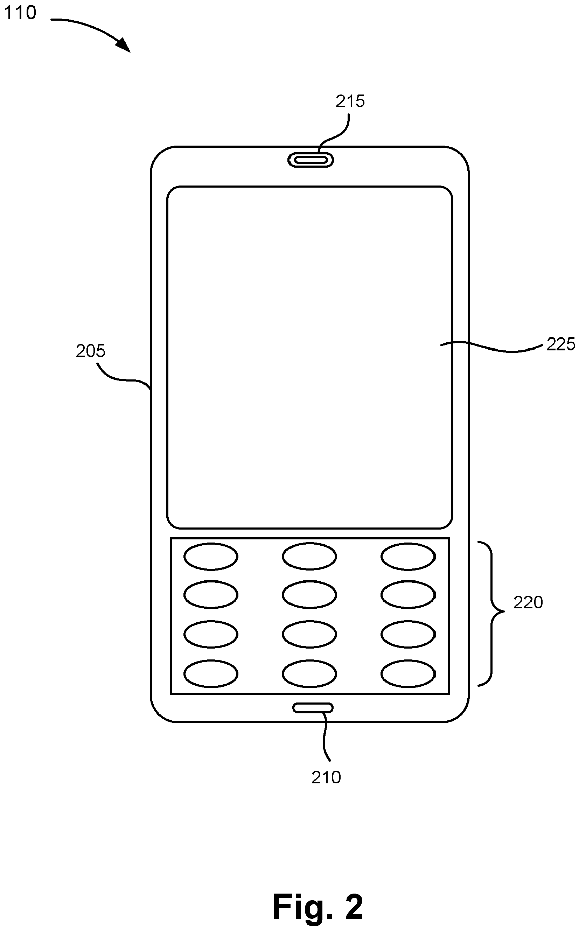

Fig. 2 is a diagram illustrating an exemplary user device 110 in which an exemplary embodiment of the contact prioritizer may be implemented. As illustrated in Fig. 2, user device 110 may comprise a housing 205, a microphone 210, speakers 215, keys 220, and a display 225. According to other embodiments, user device 110 may comprise fewer components, additional components, different components, and/or a different arrangement of components than those illustrated in Fig. 2 and described herein.

Housing 205 may comprise a structure to contain components of user device 110. For example, housing 205 may be formed from plastic, metal, or some other type of material. Housing 205 may support microphone 210, speakers 215, keys 220, and display 225.

Microphone 210 may transduce a sound wave to a corresponding electrical signal. For example, a user may speak into microphone 210 during a telephone call or to execute a voice command. Speakers 215 may transduce an electrical signal to a corresponding sound wave. For example, a user may listen to music or listen to a calling party through speakers 215.

Keys 220 may provide input to user device 110. For example, keys 220 may comprise a standard telephone keypad, a QWERTY keypad, and/or some other type of keypad (e.g., a calculator keypad, a numerical keypad, etc.). Keys 220 may also comprise special purpose keys to provide a particular function (e.g., send, call, e-mail, etc.).

Display 225 may operate as an output component. For example, display 225 may comprise a liquid crystal display (LCD), a plasma display panel (PDP), a field emission display (FED), a thin film transistor (TFT) display, or some other type of display technology.

Additionally, according to an exemplary implementation, display 225 may operate as an input component. For example, display 225 may comprise a touch-sensitive screen. In such instances, display 225 may correspond to a single-point input device (e.g., capable of sensing a single touch) or a multipoint input device (e.g., capable of sensing multiple touches that occur at the same time). Further, display 225 may be implemented using a variety of sensing technologies, including but not limited to, capacitive sensing, surface acoustic wave sensing, resistive sensing, optical sensing, pressure sensing, infrared sensing, or gesture sensing. Display 225 may also comprise an auto-rotating function.

Display 225 may be capable of displaying text, pictures, and/or video. Display 225 may also be capable of displaying various images (e.g., icons, objects, etc.) that may be selected by a user to access various applications, enter data, and/or navigate through user interfaces, etc.

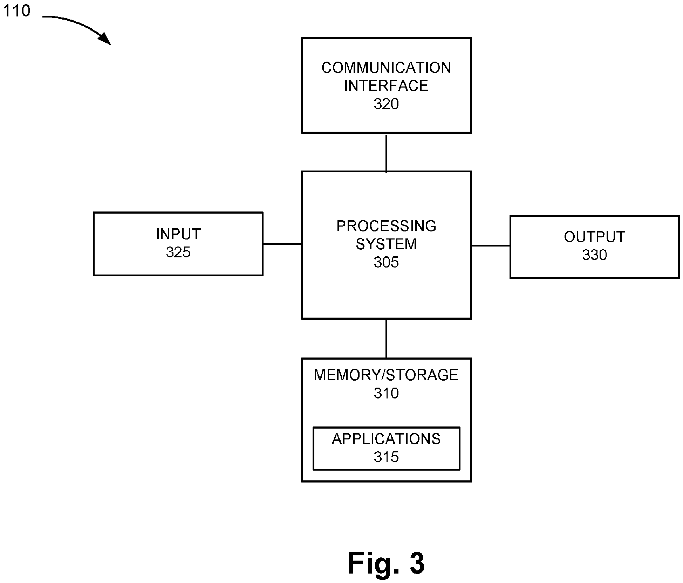

Fig. 3 is a diagram illustrating exemplary components of user device 110. As illustrated, user device 110 may comprise a processing system 305, a memory/storage 310 that may comprise applications 315, a communication interface 320, an input 325, and an output 330. According to other embodiments, user device 110 may comprise fewer components, additional components, different components, or a different arrangement of components than those illustrated in Fig. 3 and described herein.

Processing system 305 may comprise one or multiple processors, microprocessors, coprocessors, application specific integrated circuits (ASICs), controllers, multi-core processors, programmable logic devices, chipsets, field programmable gate arrays (FPGAs), application specific instruction-set processors (ASIPs), system-on-chips (SoCs), microcontrollers, central processing units (CPUs), and/or some other component that may interpret and/or execute instructions and/or data. Depending on the type of processing system 305, processing system 305 may be implemented as hardware, a combination of hardware and software, may include one or multiple memories, buses, etc.

Processing system 305 may control the overall operation or a portion of operation(s) performed by user device 110. Processing system 305 may perform one or more operations based on an operating system and/or various applications (e.g., applications 315). Processing system 305 may access instructions from memory/storage 310, from other components of user device 110, and/or from a source external to user device 110 (e.g., a network or another device).

Memory/storage 310 may comprise one or multiple memories and/or one or multiple other types of tangible storage mediums. For example, memory/storage 310 may comprise a random access memory (RAM), a dynamic random access memory (DRAM), a read only memory (ROM), a static random access memory (SRAM), a single in-line memory module (SIMM), a dual in-line memory module (DIMM), a programmable read only memory (PROM), a flash memory, and/or some other type of memory. Memory/storage 310 may comprise a hard disk (e.g., a magnetic disk, an optical disk, a magneto-optic disk, a solid state disk, etc.) along with a corresponding drive. Memory/storage 310 may be external to and/or removable from user device 110, such as, for example, a Universal Serial Bus (USB) memory, a dongle, a hard disk, mass storage, off-line storage, or some other type of storing medium (e.g., a computer-readable medium, a compact disk (CD), a digital versatile disk (DVD), a Blu-Ray™ disk (BD), etc). Memory/storage 310 may store data, application(s), and/or instructions related to the operation of user device 110. The term "computer-readable medium," as used herein is intended to be broadly interpreted to include, for example, a memory, a CD, a DVD, a BD, a hard disk, or another tangible storage medium.

Applications 315 may comprise software that provides various services or functions. By way of example, applications 315 may comprise a telephone application, a voice recognition application, a video application, a multi-media application, a music player application, an e-mail application, a contacts application, a calendar application, an instant messaging application, a web browsing application, a location-based application (e.g., a Global Positioning System (GPS)-based application, etc.), and/or other types of applications (e.g., a facial expression/recognition application, etc.). Applications 315 can include a contact prioritizer application.

Communication interface 320 may permit user device 110 to communicate with other devices, networks, and/or systems. For example, communication interface 320 may comprise one or multiple wireless and/or wired communication interfaces. Communication interface 320 may comprise a transmitter, a receiver, and/or a transceiver. According to an exemplary embodiment, communication interface 320 may include a GPS receiver. Communication interface 320 may operate according to various protocols, communication standards, or the like.

Input 325 may permit an input into user device 110. For example, input 325 may comprise a microphone (e.g., microphone 210), keys (e.g., keys 220), a display (e.g., display 225 that includes a touchscreen), a touchpad, a button, a switch, a camera, an input port, voice recognition logic, fingerprint recognition logic, a web cam, a mouse, a keyboard, and/or some other type of visual, auditory, tactile, etc., input component. Output 330 may permit user device 110 to provide an output. For example, output 330 may comprise speakers (e.g., speakers 215), a display (e.g., display 225), one or more light emitting diodes (LEDs), an output port, a vibratory mechanism, and/or some other type of output component.

User device 110 may perform operation(s) and/or process(es) in response to processing system 305 executing software instructions stored by memory/storage 310. For example, the software instructions may be read into memory/storage 310 from another memory/storage 310 or from another device via communication interface 320. The software instructions stored in memory/storage 310 may cause processing system 305 to perform processes described herein. Alternatively, according to another implementation, user device 110 may perform processes based on the execution of hardware (e.g., processing system 305, etc.), the execution of hardware and firmware, or the execution of hardware, software (e.g., applications 215), and firmware.

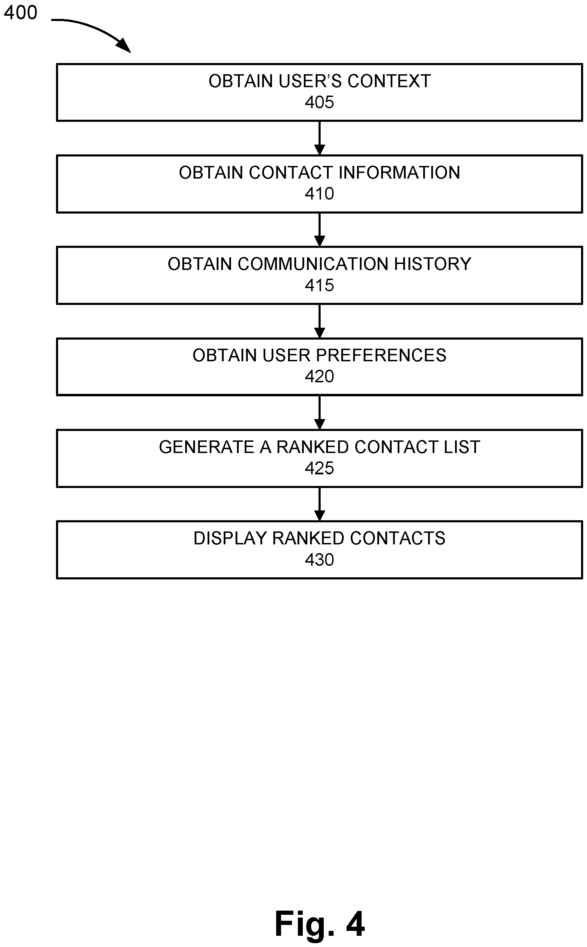

Fig. 4 is a flowchart illustrating an exemplary process 400 for generating a ranked contact list by the contact prioritizer. According to an exemplary implementation, process 400 may be performed by user device 110. For example, processing system 305 may execute an application 315 (e.g., a contact prioritizer application) stored by memory/storage 310.

Referring to Fig. 4, process 400 may begin with block 405, in which the user's context is obtained. For example, as previously described, user device 110 may include a location-aware component (e.g., a location-aware application, a GPS receiver, etc) to obtain the geographic position of user device 110. The geographic position information is obtained by contact prioritizer 115. Contact prioritizer 115 may store a mapping between geographic positions and context settings (e.g., home, work, a user-configured location, etc.) to correlate and identify the user's context for a particular time. Additionally, according to an exemplary embodiment, contact prioritizer 115 may use calendar information to select context and/or other time-based information provided by the user (e.g., when a particular location changes context over time, etc.).

In block 410, contact information is obtained. For example, contact prioritizer 115 obtains user contacts from one or multiple contact sources. For example, contact prioritizer 115 may obtain contacts from an address book application or a phone book application via an API. Additionally, or alternatively, contact prioritizer 115 may permit the user to enter contacts, import contacts from other communicative applications (e.g., an e-mail application, a telephone application, etc.), automatically add a contact when receiving a communication, etc. Still alternatively, contact prioritizer 115 may obtain a list of contacts (e.g., automated sync, user-initiated, etc.) from a server (e.g., an email server that tracks contacts, etc.) or other type of device. Contact prioritizer 115 may manage a database or some other data structure to store contacts and/or use a centralized application (e.g., an address book application, etc.) to obtain contacts.

In block 415, the user's communication history is obtained. For example, as previously described, contact prioritizer 115 is notified (e.g., by the operating system) when user device 110 receives or sends a communication. Contact prioritizer 115 may manage a database or some other data structure to store communication history information. The communication history may pertain to a particular time window, which may be pre-defined (e.g., within the last month) or user-configurable. The communication history generated for a particular communication may be different depending on the type of communication. For example, a telephone call includes time (e.g., the duration of a call), whereas an SMS message may be associated with a length (e.g., number of words, etc.). Contact prioritizer 115 may manage the communication history based on several parameters, such as, for example, the type of communication (e.g., e-mail, telephone call, SMS message, IM message, MMS message, etc.); the parties involved in the communication; the duration of the communication, if applicable; the user's context at the time of the communication; whether the communication is initiated by the user, or initiated by another party; timestamp information (e.g., date, day, hour, etc.); and/or calendar information (e.g., whether communication occurred on a holiday, during the week, weekend, etc.).

Contact prioritizer 115 may also consider other information as communication history, such as, the party's relationship with the user (e.g., family member, friend, relative, co-worker, etc.). For example, the contact information may include relationship information. Alternatively, in some cases, contact prioritizer 115 may infer certain relationships based on, for example, a contact sharing the same last name as the user, the same address, the same telephone number, etc.

In block 420, the user preferences are obtained. For example, as previously described, the user may tag a particular contact so that the contact has a certain degree of priority. Contact prioritizer 115 may use this tag information when generating a ranked contact list, as described in block 425. The user may also configure other user preferences that may impact the resulting ranked contact list, such as, for example, the time window pertaining to the communication history (e.g., one week, one month, or some other time period, etc.), selection of different ranking algorithms (e.g., a ranking algorithm based on frequency of communication, duration (e.g., for telephone calls), user-initiated communication, some combination thereof, etc.).

Additionally, according to an exemplary embodiment, the user may set as a user preference that tag information be automatically generated based on calendar and contact entry information. For example, a contact entry may include the birthday of a person, an anniversary, etc. According to such a user preference, contact prioritizer 115 may automatically tag a contact entry on the special day (e.g., birthday, etc.). As a result, the contact entry may receive a higher priority than other contact entries and be included in the ranked contact list. This feature may be useful to a user because it may serve as a reminder to contact the person. When displayed on the home screen, the contact entry may include a tag, such as "birthday," "anniversary," etc., so that the user is aware of why the contact entry is a ranked contact entry. Other types of reminder (i.e., selecting a particular contact to be a ranked contact) to a user may also be triggered based on location, calendar information, communication history (e.g., a user habitually calls a contact at a particular time during the week, etc.), etc.

In block 425, a ranked contact list is generated. For example, contact prioritizer 115 will generate a ranked contact list based on the user's context, contact information, communication history, user preferences, and other information described herein. Contact prioritizer 115 will select a particular number (e.g., a default value, user-configured value, etc.) of ranked contacts from the ranked contact list according to a priority assigned to the contact entries included in the ranked contact list.

As previously described, the ranked contact list may be generated based on different types of ranking algorithms. A ranking algorithm may assign weight(s) to a contact entry based on the various information described. A contact entry having a higher weight relative to another contact entry may correspond to a higher inferred user priority for that contact entry. In view of this framework, multiple weighting schemes may be implemented that may yield different results (e.g., ranked contacts) depending on which parameters are assigned weights, the value of such weights, etc. Contact prioritizer 115 may assign weights to one or more parameters included in the various information (e.g., communication history, contact entry information, etc.). Contact prioritizer may calculate an inferred user priority for each contact entry or portion of the contact entries residing on user device 110. Contact prioritizer 115 will select contact entries having the highest inferred user priority, the number of which may be user-configurable or a default value.

In block 430, the ranked contacts are displayed. For example, contact prioritizer 115 will display the ranked contacts (e.g., as an icon or some other graphical user interface) on a home screen, desktop, etc., of user device 110. The user may then easily access and select a ranked contact to initiate a communication.

Although Fig. 4 illustrates an exemplary process 400, in other implementations, process 400 may include additional operations, fewer operations, and/or different operations than those illustrated and described with respect to Fig. 4.

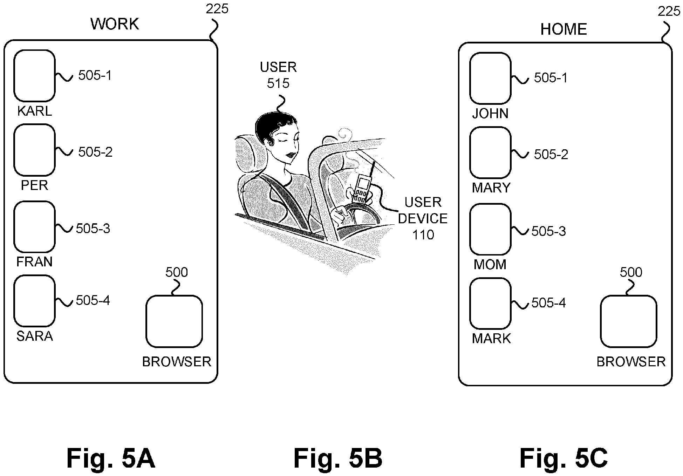

Figs. 5A - 5C are diagrams illustrating an exemplary scenario pertaining to a use-case of contact prioritizer 115. For example, Fig. 5A illustrates an exemplary home screen displayed by display 225 of user device 110 when user 515 is at work. The home screen includes a browser icon 500, and four contacts 505-1 through 505-4 ("Karl", "Per", "Fran", and "Sara") which were generated by contact prioritizer 115. Subsequently, as illustrated in Fig. 5B, user 515 travels from her work place to home. Upon arrival at user's 515 home, the home screen displayed by display 225 of user device 110 changes to indicate four new contacts 505-1 through 505-4 ("John", "Mary", "Mom", and "Mark"), as illustrated in Fig. 5C.

The foregoing description of implementations provides illustration, but is not intended to be exhaustive or to limit the implementations to the precise form disclosed. Modifications and variations are possible in light of the above teachings or may be acquired from practice of the teachings. For example, the contact prioritizer may permit other applications (e.g., a phone book application, a dialer application, an SMS picker application, etc., to present the ranked contacts to a user (e.g., as a shortcut). In this way, the contact prioritizer may act as a backend service to other communicative applications resident on the user device.

The terms "comprise," "comprises," "comprising," as well as synonyms thereof (e.g., include, etc.), when used in the specification is taken to specify the presence of stated features, integers, steps, or components but does not preclude the presence or addition of one or more other features, integers, steps, components, or groups thereof. In other words, these terms mean inclusion without limitation.

In addition, while a series of blocks is described with regard to the process illustrated in Fig. 4, the order of the blocks may be modified in other implementations. Further, non-dependent blocks may be performed in parallel. Additionally, with respect to other processes described in this description, the order of operations may be different according to other implementations, and/or operations may be performed in parallel.

The embodiments described herein may be implemented in many different forms of software and/or firmware executed by hardware. For example, a process or a function may be implemented as "logic" or as a "component." The logic or the component may include, for example, hardware (e.g., processing system 305, etc.), a combination of hardware and software (e.g., applications 315), a combination of hardware and firmware, or a combination of hardware, software, and firmware. The implementation of software or firmware has been described without reference to the specific software code since software can be designed to implement the embodiments based on the description herein. Additionally, a computer-readable medium may store instructions, which when executed, may perform processes and/or functions pertaining to the exemplary embodiments described herein.

The article "a," "an," and "the" are intended to mean one or more items. Further, the phrase "based on" is intended to mean "based, at least in part, on" unless explicitly stated otherwise. The term "and/or" is intended to mean any and all combinations of one or more of the listed items.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded as illustrative rather than restrictive.

No element, act, or instruction used in the present application should be construed as critical or essential to the implementations described herein unless explicitly described as such.

## Claims

1. A method comprising:
determining a location of a user device and a user;
identifying a user context of the user based on the location;
generating a communication history based on communications received and sent by the user device within a time window;
storing contact entries;
generating a ranking for at least some of the contact entries based on the identified user context, the communication history, and the contact entries, wherein the ranking is inferred user priorities associated with contact entries; and
displaying the ranked contact entries on a home screen or a desktop of the user device.

2. The method of claim 1, wherein the user context includes a work context and a home context, and the communication history includes at least one of e-mail messages, telephone calls, short messaging service messages, multimedia messaging service messages, or instant messaging messages.

3. The method of claim 1, further comprising:
receiving a user tag designated for one of the contact entries; and
assigning a priority weighting value in correspondence to the user tag to the one of the contact entries.

4. The method of claim 1, wherein the identifying further comprises:
identifying whether there is a time restriction pertaining to the location; and
identifying the user context based on the location and the time restriction when the time restriction exists pertaining to the location.

5. The method of claim 1, further comprising:
identifying a second user context when the user moves to another location that correlates to the second user context;
generating a second ranking for at least some of the contact entries based on the second user context, a communication history, and the contact entries, wherein the second ranking is inferred user priorities associated with contact entries; and
displaying the second ranked contact entries.

6. The method of claim 1, wherein the identifying comprises:
using calendar information for identifying the user context.

7. The method of claim 1, wherein the generating the communication history comprises:
generating the communication history based on the user context pertaining to the communications received and sent by the user device within the time window.

8. The method of claim 1, further comprising:
receiving a user selection as to a type of ranking algorithm to use to generate the ranking.

9. The method of claim 1, wherein the generating the ranking comprises:
assigning one or more weights in relationship to one or more parameters included in the identified user context, the communication history, and the contact entries;
calculating the inferred user priorities for the at least some of the contact entries; and
selecting contact entries having higher inferred user priorities relative to other contact entries as the ranked contact entries.

10. The method of claim 1, further comprising:
receiving a user selection for specifying the time window.

11. A user device comprising:
a location component configured to identify a location of the user device;
a memory that stores instructions; and
a processor that executes the instructions and configures the processor to:
identify a user context of a user based on a location identified by the location component;
generate a communication history based on communications received and sent by the user device within a time window;
store contact entries;
generate a ranking for at least some of the contact entries based on the identified user context, the communication history, and the contact entries, wherein the ranking is inferred user priorities associated with contact entries; and
display the ranked contact entries.

12. The user device of claim 11, wherein the processor is further configured to:
receive a user tag designated for one of the contact entries; and
assign a priority weighting value in correspondence to the user tag to the one of the contact entries.

13. The user device of claim 11, wherein the processor is further configured to:
identify a second user context when the user moves to another location that correlates to the second user context;
generate a second ranking for at least some of the contact entries based on the second user context, a communication history, and the contact entries, wherein the second ranking is inferred user priorities associated with contact entries; and
display the second ranked contact entries.

14. The user device of claim 11, wherein when generating the ranking, the processor is further configured to:
assign one or more weights in relationship to one or more parameters included in the identified user context, the communication history, and the contact entries;
calculate the inferred user priorities for the at least some of the contact entries; and
select contact entries having higher inferred user priorities relative to other contact entries as the ranked contact entries.

15. The user device of claim 11, wherein the user device is a mobile communication device, and wherein the user context includes a work context and a home context, and the communication history includes at least one of e-mail messages, telephone calls, short messaging service messages, multimedia messaging service messages, or instant messaging messages, and wherein the processor is further configured to:
receive a user selection as to a type of ranking algorithm to use to generate the ranking.
